# EUROPEAN PATENT SPECIFICATION

(11) **EP 4 084 372 B1**
(45) Date of publication and mention of the grant of the patent: **12.11.2025**
(21) Application number: 21171479.5
(22) Date of filing: 30.04.2021
(51) Int. Cl.: H04L 41/142

(54) **METHOD AND APPARATUS FOR COMMUNICATION SYSTEMS COMPRISING MANAGEMENT DATA ANALYTIC FUNCTIONS**
VERFAHREN UND VORRICHTUNG FÜR KOMMUNIKATIONSSYSTEME MIT VERWALTUNGSDATENANALYSEFUNKTIONEN
PROCÉDÉ ET APPAREIL POUR SYSTÈMES DE COMMUNICATION COMPORTANT DES FONCTIONS D'ANALYSE DE DONNÉES DE GESTION

(43) Date of publication of application: 02.11.2022
(73) Proprietor: Nokia Solutions and Networks Oy, 02610 Espoo (FI)
(72) Inventor: MWANJE, Stephen, 84405 Dorfen (DE); KONSTANTINOS, Samdanis, 81927 München (DE)
(74) Representative: Page White Farrer

(56) References cited:
- "3rd Generation Partnership Project; Technical Specification Group Services and System Aspects; Architecture enhancements for 5G System (5GS) to support network data analytics services (Release 17)", 22 April 2021 (2021-04-22), XP052029387, Retrieved from the Internet <URL:https://ftp.3gpp.org/tsg_sa/WG2_Arch/Latest_SA2_Specs/DRAFT_INTERIM/Archive/INTERIM_DRAFT_23288-h10_S2-144E_CRs_Implemented.zip INTERIM_DRAFT_23288-h10_S2-144E_CRs_Implemented.docx> [retrieved on 20210422]
- "3rd Generation Partnership Project; Technical Specification Group Services and System Aspects; Study on enablers for network automation for the 5G System (5GS); Phase 2 (Release 17)", no. V17.0.0, 17 December 2020 (2020-12-17), pages 1 - 382, XP051975177, Retrieved from the Internet <URL:https://ftp.3gpp.org/Specs/archive/23_series/23.700-91/23700-91-h00.zip 23700-91-h00.docx> [retrieved on 20201217]
- "3rd Generation Partnership Project; Technical Specification Group Services and System Aspects; Architecture enhancements for 5G System (5GS) to support network data analytics services (Release 16)", vol. SA WG2, no. V16.3.0, 27 March 2020 (2020-03-27), pages 1 - 62, XP051861086, Retrieved from the Internet <URL:ftp://ftp.3gpp.org/Specs/archive/23_series/23.288/23288-g30.zip 23288-g30.docx> [retrieved on 20200327]
- "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.2.0, 11 June 2019 (2019-06-11), pages 1 - 124, XP051753968, [retrieved on 20190611]
- "3rd Generation Partnership Project; Technical Specification Group Services and System Aspects; Procedures for the 5G System (5GS); Stage 2 (Release 17)", vol. SA WG2, no. V17.0.0, 31 March 2021 (2021-03-31), pages 1 - 646, XP052000251, Retrieved from the Internet <URL:https://ftp.3gpp.org/Specs/archive/23_series/23.502/23502-h00.zip 23502-h00.docx> [retrieved on 20210331]

## Description

### TECHNICAL FIELD

The present disclosure relates to apparatus, a method, and a computer program, and in particular but not exclusively to apparatus, methods and computer programs for communication systems comprising management data analytic functions.

### BACKGROUND

Management data analytic functions of a communications system may provide one or more management data analytic services involving receiving input data from one or more network functions, and computing an analytics output from the input data.

3GPP TR 23.791 V16.2.0 mentions the issue of a network function requesting or subscribing from a NWDAF for providing analytic information to facilitate the network function for decision making.

"3rd Generation Partnership Project; Technical Specification Group Services and System Aspects; Study on Enablers for network automation for the 5G System (5GS); Phase 2 (Release 17)", 3GPP TR 23.700-91, V17.0.0 relates to studying enhancements for analytics and network data analytics function (NWDAF) for at least one of the following objectives: to ensure that slice service level agreement is guaranteed, for NWDAF architecture enhancements (including multiple NWDAF instances in one PLMN), NWDAF features enhancement (for enabling real-time or near real time NWDAF communication), and new use cases/key issues (including interaction between NWDAF and ML model and training service owned by the operator).

"3rd Generation Partnership Project; Technical Specification Group Services and System Aspects; Architecture enhancements for 5G System (5GS) to support network data analytics services (Release 16)" 3GG TS 23.288, V16.3.0 relates to defining Stage 2 architecture enhancements for the 5GS to support network data analytics services in 5G Core network.

"3rd Generation Partnership Project; Technical Specification Group Services and System Aspects; Study of Enablers for Network Automation for 5G (Release 16)"; 3GPP TR 23.791, V16.2.0 relates to studying and specifying how to collect data and how to feedback data analytics to the network functions.

### SUMMARY

There is hereby provided apparatus according to claim 1, apparatus according to claim 8, a method according to claim 14 and a method according to claim 15.

The apparatus may comprise: at least one processor; and at least one memory including computer program code, the at least one memory and computer program code configured to, with the at least one processor, cause the apparatus to perform the recited operations.

### BRIEF DESCRIPTION OF THE FIGURES

Some example embodiments will now be described in further detail, by way of example only, with reference to the following examples and accompanying drawings, in which:
Figure 1 shows a representation of elements of a communication system according to some example embodiments;
Figure 2 shows a representation of an example of an interaction between a consumer function and a producer function according to some example embodiments;
Figure 3 shows a representation of operations at data analytics service producer and consumer functions according to some example embodiments;
Figure 4 shows a representation of operations at data analytics service producer and consumer functions according to some example embodiments;
Figure 5 shows a representation of operations at data analytics service producer and consumer functions according to some example embodiments;
Figure 6 shows a representation of an example of a data analytics service information report according to some example embodiments;
Figure 7 shows a representation of another example of a data analytics service information report according to some example embodiments;
Figure 8 shows a representation of another example of a data analytics service information report according to some example embodiments;
Figure 9 shows a representation of an example of descriptions of attributes of an analytics service information report according to some example embodiments;
Figure 10 shows a representation of an example of operations at data analytics service and consumer functions according to some example embodiments;
Figure 11 shows a representation of apparatus for implementing operations according to some example embodiments;
Figure 12 shows a representation of non-volatile memory media; and
Figure 13 shows a representation of another example of operations at data analytics service and consumer functions according to some example embodiments.

### DETAILED DESCRIPTION

The following detailed description focusses, by way of example, on management data analytics for a radio communications system having a 3GPP service-based architecture (SBA), but the technique is also applicable to other types of communication systems.

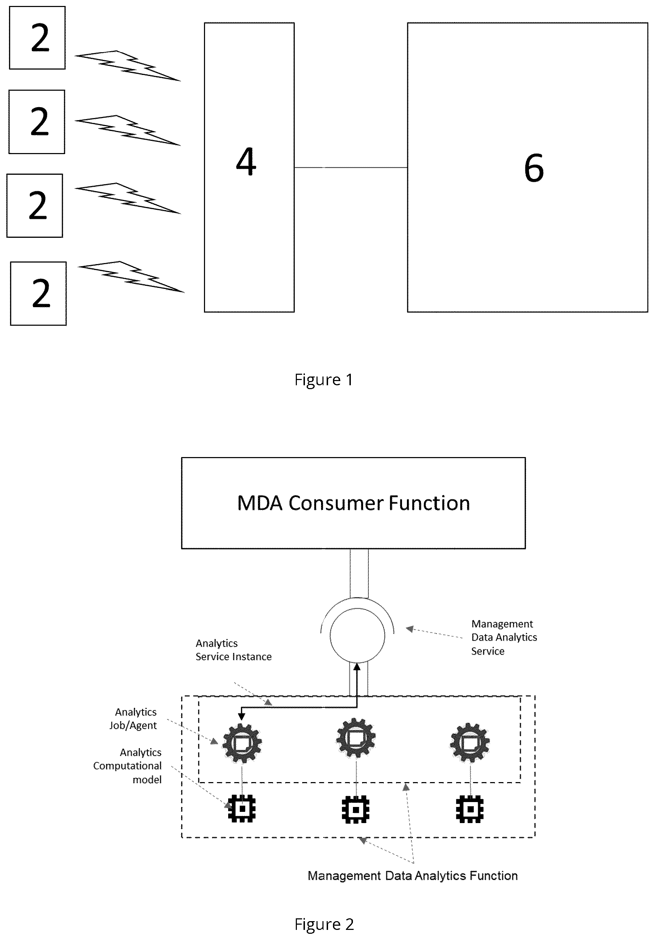

Figure 1 shows a representation of an example of elements of a radio communication system for e.g. providing access via a radio interface to one or more data networks. The communication system includes components 2 providing user equipment (UE) functionality, one or more components 4 (such as base stations) providing radio access network (RAN) functionality; and one or more components providing core network (CN) functionality. The core network functionality 6 provides, for example, connections to one or more data networks (not shown). Each of the components in the UE, RAN and CN domains may generate management data such as performance metrics (PM) and key performance indicators (KPIs) that may be used as the input for one or more computation models of one or more management data analytics services (MDASs). One or more management data analytics functions may be provided, for example, at the management layer of the core network domain 6.

With reference to Figure 2, one or more management data analytics consumer functions may request and receive analytics from a management data analytics service producer function.

Analytics may be defined as: the concept of or the area of work on computing analysis on network/management data to produce insight that helps improve the quality of a hypothesis.

Analytics can be applied to multiple use cases, wherein an analytics use case may be defined as a specific problem for a hypothesis that can be generated and thus for which analysis may be undertaken.

The analytics may be computed using an analytics computation model. The analytics computation model may be e.g. a mathematical function, an artificial intelligence (AI)/machine learning (ML) function or some rule-based procedure.

The output of the analytics computation model may, for example, be one or more statistics, one or more prediction results, or one or more recommendation options.

An Analytics Service Instance (ASI) may be defined as a capability to produce analytics for a specific category of use case.

An Analytics Job may be defined as the operations/processes related to producing analytics report(s) for a specific use case, including the operations/processes to format and compile the analytics report, and direct the analytics report to a MDA consumer function.

An Analytics Job instance may represent an MDAS Analytics activity of a particular Analytics Job for the particular ASI. In order to activate an Analytics Job, a MDA consumer may create Analyticsjob object instances on the MDAF (MDA producer). When a MDA consumer wishes to deactivate an Analytics Job, the MDA consumer may delete the corresponding AnalyticsJob instance.

A management data analytics function (MDAF) may comprise an entity at which one or more software components are executed to provide statistics, and/or prediction analytics and/or recommendation options based on management data to a consumer function. The MDAF may itself perform computations of the analytics, or the MDAF may obtain computed analytics from another entity.

A MDAF may provide a plurality of ASIs for a plurality of respective specific categories of use cases. For example, a MDAF entity may provide ASIs relating to network function (NF) load, feasibility check, resource utilization. The computation models for these ASIs may use the same or similar inputs (e.g. performance metrics (PMs) and key performance indicators (KPIs) from network objects of a given geographical area. Each ASI object (instance of the ASI information object class (IOC)) may contain one or more Analyticsjob objects (instances of the Analytics Job IOC) created at the request of a MDA consumer function. Other MDA consumer functions may subscribe to the same Analyticsjob object or create another Analyticsjob object (another instance of the Analytics Job IOC) either immediately (if the required input data is already available) or after a time interval (if the MDAS producer requires time to obtain the required input data (e.g. PMs and KPIs)).

Examples of analytics that may be computed from distinct PMs and KPIs regarding network objects like Network Function (NFs), gNBs, cell and UEs include: analytics on network processes such as mobility optimization or load balancing, analytics on faults and alarms; and analytics on user and traffic characteristics like speed. For example, the analytics output may comprise (i) statistics or prediction data for the consumer function, and/or (ii) root cause analysis or recommendation options to inform a decision at the consumer function.

For a given ASI (relating to a specific category of use case), there may be different context options for e.g. one or more of the inputs, and/or one or more of the computations. For example, different context options may produce the same type of analytics output but with different levels of granularity.

A single ASI may provide options to vary one or more aspects of the context, such as: the time schedule for collecting the input data; the target objects (e.g. a UE, a group of UEs, a cell) for the input data; the geographical area for the input data; events such as e.g. UE mobility; accuracy rate in terms of sampling ratio and computational model; other filters such as threshold crossing. A MDA consumer function may specify the required context option when requesting analytics according to the ASI. The same ASI may therefore lead to a plurality of Analytics Jobs, each using the same one or more types of analytics computation model but varying in terms of context.

The MDAF supports multiple Analytics Jobs related to the same ASI. Each Analytics Job provides statistics, predictions and/or recommendation options in response to a specific request from one or more consumer functions. The analytics computation model for an ASI may, for example, be a mathematical function, a machine learning model, or a rule-based procedure, etc.

Each ASI (and the computation model associated with it) supports multiple context options. An Analytics Job (according to the ASI) is instantiated for a specific one of the context options. A description of ASI according to a pre-defined format is used to: (a) provide consumer functions with information about the context options for a specific ASI; and/or (b) support the discovery by MDA consumer functions of context options for analytics services meeting the requirements of the MDA consumer function; and/or (c) facilitate the provision to MDA consumer functions notifications about context option updates; and/or (d) facilitate the request of specific, tailored analytics by a MDA consumer function.

According to this example, the ASI IOC includes an attribute referred to as the ASI Context Information. The value(s) assigned to this attribute provide information about the configurable parameters and parameter range of the ASI which identify the different scenarios/conditions (context options) for which the ASI can produce analytics.

In the example shown in Table 1 below, the ASI IOC also includes three other attributes: the ASI Name/ID; ASI-agnostic Description information; and ASI-specific Description information. The ASI-agnostic Description information and ASI-specific Description information may each be described using a respective DataType that can be notified or their combination may be described using a combined DataType that may change depending on the analytics use case.

**Table 1**

| **Attribute name** | **Description** | **Support Qualifier** |
|---|---|---|
| ASI Name/ID | A name that identifies the ASI | M |
| ASI-agnostic Description information | Information that describes analytics and is applicable to all ASIs | M |
| ASI-specific Description information | Information that describes the ASI and that would enable an operator or a network management function to match and accordingly select the ASI to a use case and need | M |
| ASI Context information | Configurable parameters and parameter range of the ASI which identify the different scenarios/conditions for which analytics can be provided towards the MDA consumer | M |

As shown in Table 2 below, the Analyticsjob IOC also includes a Job Context Information attribute that indicates a specific context option (from the set of possible context options indicated by the ASI Context Information). This facilitates the instantiation or subscription by a MDA consumer function to an ongoing particular analytics service (having a specific context).

**Table 2**

| **Attribute name** | **Description** | **Support Qualifier** |
|---|---|---|
| Job Name/ID | A name that identifies the AnalyticsJob | M |
| Job Context information | Specified values of configurable parameters related to an ASI context information for accommodating a specific AnalyticsJob | M |

The ASI Context information lists the potential variables for which a MDA consumer function can choose one of a set of options. These potential variables include the various information objects (or combinations thereof) for which the outcome of the ASI may differ. For example a single ASI providing Cell-Interference analytics may (i) provide cell interference analytics based on input data for a single cell, of for a group of cells, or for a specific cell neighbor relationship, and (ii) may do any of these for different time intervals. In this example, the considered cell configuration and time/granularity period are the contexts that may be varied. The Job Context Information for a specific Analytics Job would specify one of these three different cell configurations, and a specific time interval.

Table 3 below illustrates more examples of variables for a specific ASI. The ASI Context Information may indicate one or more of these variables. The ASI Context Information may alternatively or additionally indicate one or more variables not included in the examples shown in Table 3. The ASI Context information is a variable length array whose entries are (field, value) tuples that can be filled differently depending on use case. The value for one or more of the tuples may itself be a data type.

**Table 3:**

| **Variable Attribute Name** | **Description** | **Support Qualifier** |
|---|---|---|
| NF, gNB, cell configuration | Configuration of a target object related to analytics service Instance | M |
| Analytics scope | Indication of the analytics scope, i.e. indicating issue type (e.g. load prediction, is optimal mobility target) or root cause indication or alarm correlation (e.g. predict the cause of problem) | M |
| Scheduling time(s) | Timing information, i.e. start time and duration as well as validity time, related to analytics service Instance | M |
| Target objects | Target UE, or group of UEs, Area of interest, connection/session, etc. | M |
| Geographical area | Geographical area related with the operation of an AnalyticsJob | O |
| | | |

In relation to scheduling time, we note that the MDAF may either continuously produce an analytics related to an ASI by constantly collecting input data (e.g. PM and KPI) from various sources, or the MDAF may instantiate an analytics job related to an ASI by triggering the collection of the input PM and KPI data from corresponding sources of this data. The availability of analytics and potential waiting time may be different for these two cases.

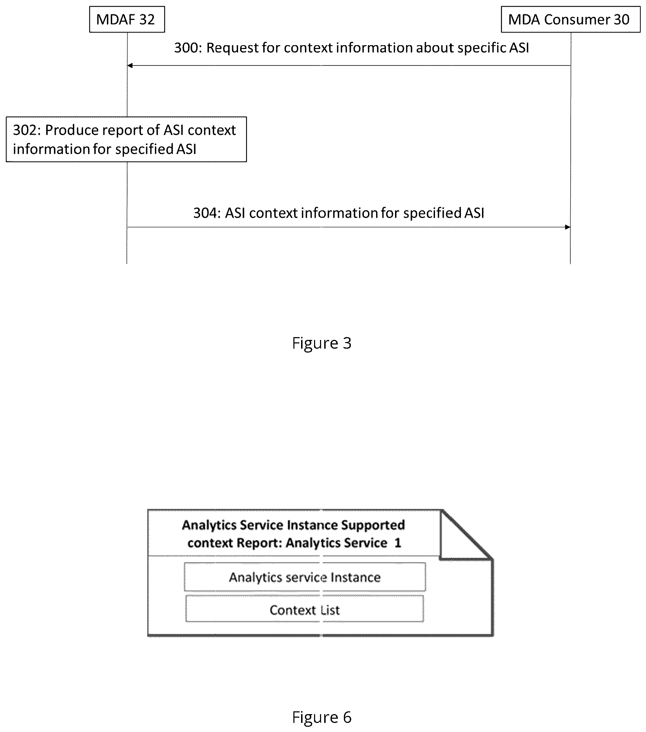

Figure 3 illustrates one example of operations at producer and consumer functions.

A MDA Consumer function 30 directs (OPERATION 300) to MDAF 32 a request for a list of all ASI context options supported by MDAF 32 for a specific ASI. The request identifies the ASI by means of an ASI identifier. The MDAF 32 produces an ASI report including the ASI Context Information for the specified ASI (OPERATION 302), and directs the report to the MDA Consumer function 30 (OPERATION 304). With reference to Figure 6, the report directed to the MDA consumer function 30 may comprise an ASI Supported Analytics-Context notification listing all the context options for the ASI specified in the request from the ASI. The items in the list may have different dimensions and/or be represented in different ways.

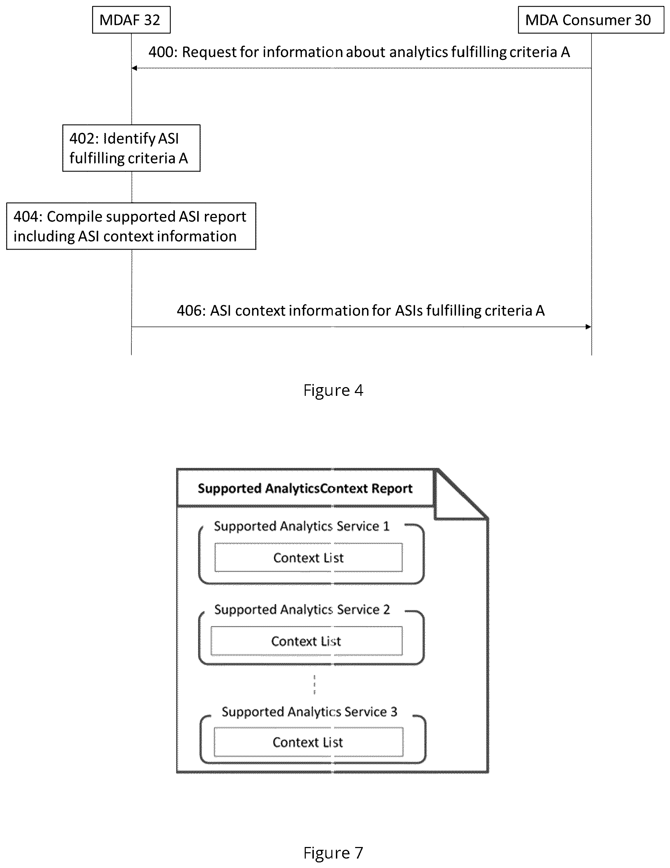

Figure 4 illustrates another example of operations at consumer and producer functions according to an example embodiment. In this example, the request (OPERATION 400) does not identify a specific ASI but instead indicates one or more criteria A. Example criteria may include one or more specific input performance metrics (PMs). In response to the request, the MDAF 32 identifies one or more ASIs meeting the indicated criteria A (OPERATION 402), and compiles a report indicating the one or more identified ASIs and including ASI context information for the one or more identified ASIs (OPERATION 404). The MDAF 32 then directs the report to the MDA consumer function 30 (OPERATION 406). With reference to Figure 7, the report may comprise an ASI Supported Context notification listing the ASIs that meet the indicated criteria A, and including a context sub-list for each listed ASI.

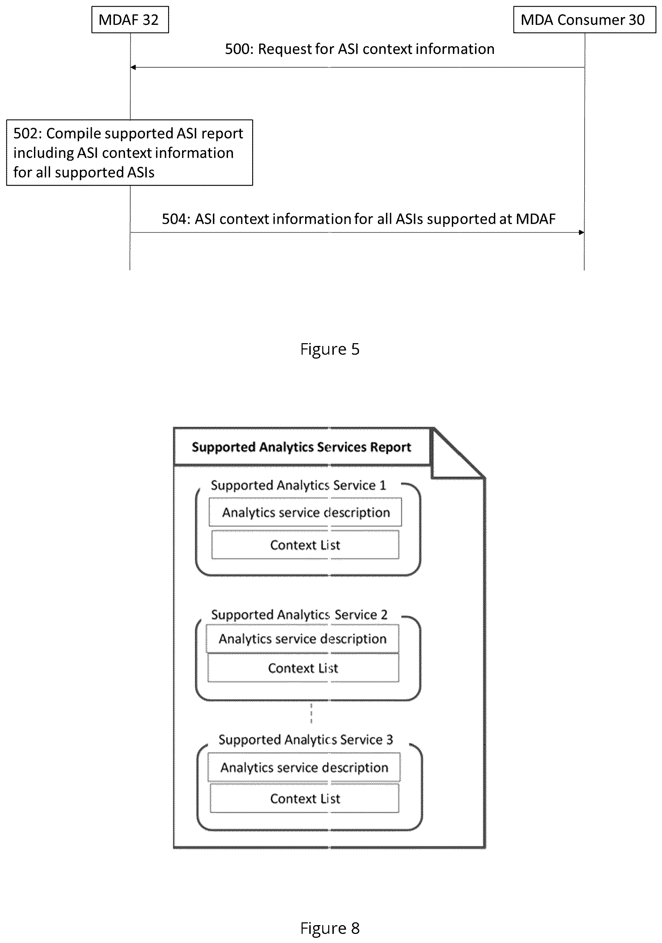

Figure 5 illustrates another example of operations at producer and consumer functions. MDA Consumer function 30 directs (OPERATION 500) to MDAF 32 a general request for information about ASIs supported by MDAF 32. The request does not specify any particular ASI, or specify any particular criteria. In response to the request, the MDAF 32 compiles (OPERATION 502) a report including a list of all ASIs supported by the MDAF 32 and including ASI context information for each of the supported ASIs. The MDAF 32 directs the report to the MDA consumer function 30 (OPERATION 504). With reference to Figure 8, the report may comprise a Supported ASI notification which lists all the supported ASI and their contexts.

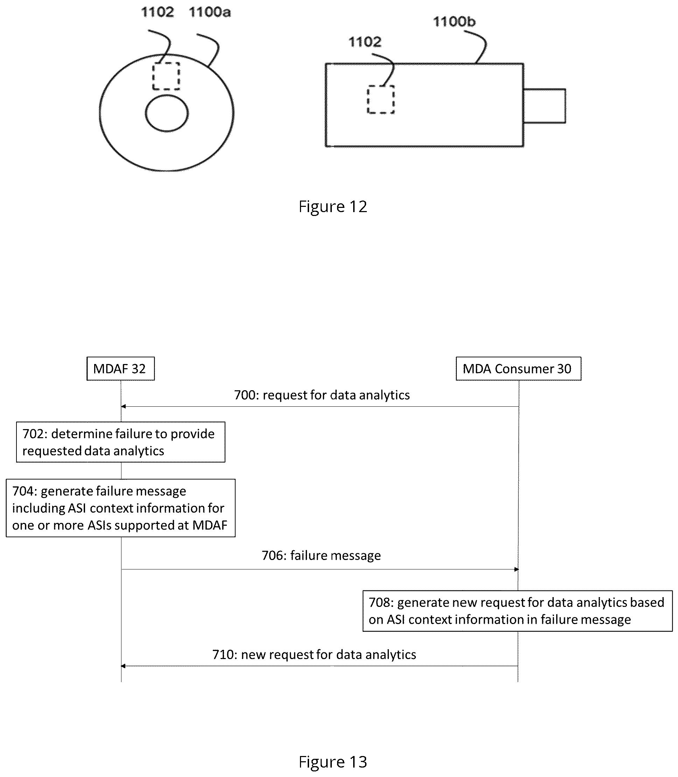

Figure 13 illustrates another example of operations at consumer and producer functions according to an example embodiment. In this example, the MDA consumer function 30 sends a request for data analytics to the MDAF 32 (OPERATION 700), without first having all current ASI context information for the ASIs supported at the MDAF 32. The MDAF 32 determines that it cannot meet the request for data analytics (OPERATION 702). The MDAF generates a failure message including ASI context information about one or more ASls supported at the MDAF (OPERATION 704), and directs the failure message to the MDA consumer function 30 (OPERATION 706). The MDA consumer function 30 may then generate a new request for analytics based on the ASI context information included in the received failure message (OPERATION 708), and direct the new request for data analytics to the MDAF 32 (OPERATION 710).

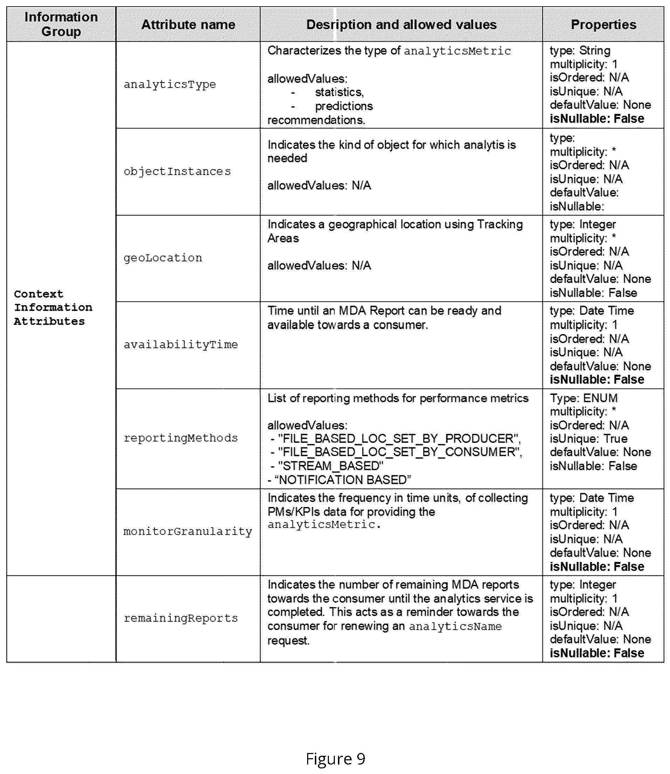

For the context reports mentioned above, an ASI Supported Context Notification <<datatype>> may be used to capture the ASI context information for a particular ASI name or Id and analytics model Id. Table 4 below shows an example structure and attributes for the ASI Supported context Report, and Figure 9 provides example descriptions of attributes of the ASI Supported Context Report.

**Table 4**

| **Attribute name** | **S** | **isReadable** | **isWritable** | **isInvariant** | **isNotifyable** |
|---|---|---|---|---|---|
| analyticsName | M | T | F | F | T |
| analyticsModel | M | T | F | F | T |

| **Context Information Attributes** | | | | | |
|---|---|---|---|---|---|
| analyticsType | M | T | F | F | T |
| objectlnstances | M | T | F | F | T |
| geoLocation | M | T | F | F | T |
| availabilityTime | O | T | F | F | T |
| reportingMethods | M | T | F | F | T |
| monitorGranularity | O | T | F | F | T |
| remainingReports | O | T | F | F | T |

A Supported ASI Notification <<dataType>> may indicate the supported ASIs and their related information. With reference to Table 5 below, each entry (for each supported ASI) may be a tuple of ASI identifier and ASIdescriptionInformation and ASIContextList below.

**Table 5:**

| **Analytics Service** | **Description information** | **Context Information** |
|---|---|---|
| ASIName 1 | ASI_1_Descriptioninformation | ASI_1_ContextList |
| ASIName 2 | ASI_2_Descriptioninformation | ASI_2_ContextList |
| ASIName 3 | ASI_3_Descriptioninformation | ASI_3_ContextList |
| : | : | : |

The examples described above involve the MDA consumer function directing the request for ASI information to the MDAF supporting the ASI(s). According to another example, the MDA consumer function may direct the request to a repository function which stores information about the management services produced by a plurality of management service producer functions, including ASI information (including ASI context information) about the ASIs supported by one or more management data analytics functions.

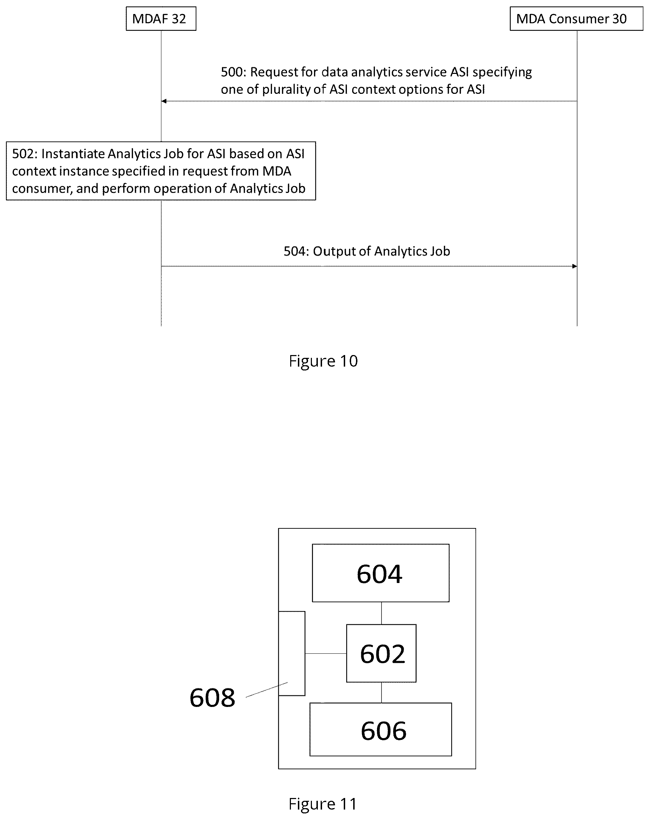

Figure 10 illustrates one example of operations at consumer and producer functions after the MDA consumer function 30 has context information about one or more ASIs supported by the MDAF 32. The MDA consumer function 30 directs to the MDAF 30 a request for the performance of a specific ASI supported by the MDAF 30 (OPERATION 500). The request specifies one of the set of ASI context options for the ASI. In response to receiving the request, the MDAF 32 instantiates an Analytics Job for the specified ASI context option, and performs the operation of the Analytics Job (OPERATION 502). The computing of the analytics may be performed at the MDAF 32, or at another function that provided the computed result to the MDAF 32. The MDAF reports the output of the Analytics Job to the MDA consumer function 30 (OPERATION 504).

The example techniques described above include a structure and format for describing the supported context of MDA ASI in a way that is independent of the specific analytics use cases, and thereby facilitate the discovery and notification of the context-specific capabilities of ASI that can be instantiated upon request. The above-described techniques facilitate one or more of the following: (a) leverage of analytics context information to request and discover available/ongoing Analytics Jobs or potential Analytics Jobs of an ASI at an MDAS producer; (b) notification of supported and potential analytics contexts for a specific Analytics Job or ASI; and (c) notification to MDA consumers regarding a range of supported analytics context, potential updates, and the timing for providing an MDA report.

Figure 11 illustrates an example of a hardware component for implementing the operations of the MDA producer function 32 or the MDA consumer function 30 in the embodiments described above. The apparatus may comprise at least one processor 602 coupled to one or more interfaces 608 to the component implementing the other of the two functions (and other components of the communications system implementing other functions). The at least one processor 602 executes a software component implementing the operations described above. The software code may be stored in a memory 606 coupled to the processor 602.

Figure 12 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods described previously.

It is to be noted that embodiments of the present invention may be implemented as circuitry, in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as the base stations or user equipment of the above-described embodiments.

As used in this application, the term "circuitry" refers to all of the following: (a) hardwareonly circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as the user equipment or base stations of the above-described embodiments, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

## Claims

1. Apparatus, comprising:
means for receiving a request (300, 400) from a component implementing a management data analytics consumer function (30) of a communications system;
means for, based on the request, directing (304, 406, 504), to the component implementing the management data analytics consumer function (30) of the communications system, information about at least one data analytics service instance provided by at least one management data analytic function (32) of the communications system;
**characterised in that**: the information about at least one data analytics service instance comprises information about context options for the data analytics service instance, wherein the context options indicates configurable parameters and parameter range for which the at least one data analytics service instance can produce analytics, and that the apparatus further comprises means for receiving a request from the component implementing the management data analytics consumer function (30) for performance of one or more of the at least one data analytics service, wherein the request comprises a set of the context options for said one or more of the at least one data analytics service.

2. The apparatus according to claim 1, wherein the request (300) specifies one or more data analytics service instances, and the information comprises information about context options for the data analytics service instances specified in the request.

3. The apparatus according to claim 1, wherein the request (400) specifies one or more criteria; wherein the apparatus further comprises means for identifying one or more data analytics service instances meeting the specified criteria; wherein the information comprises information about context options for the one or more identified data analytics service instances.

4. The apparatus according to claim 1, wherein the request (400) specifies one or more criteria; and the apparatus comprises means for, in response to a determination that the at least one management data analytics function (32) does not support a data analytics service instance fully meeting the criteria, identifying one or more data analytics service instances that partly meet the specified criteria.

5. The apparatus according to claim 1, wherein the request is a request for notification about what data analytic service instances are supported at the management data analytics function (32).

6. The apparatus according to claim 1, wherein the request is a data analytics request, and the apparatus comprises means for performing the directing of the information in response to a failure at the management data analytics function (32) to meet the data analytics request.

7. The apparatus according to any preceding claim, wherein the apparatus implements the management data analytics function (32), or implements a centralised repository function storing information about the management data analytics function (32).

8. Apparatus implementing a management data analytics consumer function (30) of a communications system, comprising:
means for directing a request (300, 400, 500) to a component implementing a function of the communications system; and
receiving information about at least one data analytics service instance provided by at least one management data analytic function (32);
**characterised in that** the information about the at least one data analytics service instance comprises information about context options for the data analytics service instance, wherein the context options indicates configurable parameters and parameter range for which the data analytics service instance can produce analytics and that the apparatus further comprises means for directing, to the at least one management data analytic function (32), a request for performance of one or more of the at least one data analytics service, wherein the request comprises a set of the context options for said one or more of the at least one data analytics service.

9. The apparatus according to claim 8, wherein the request (300, 500) specifies one or more data analytics service instances and/or specifies one or more criteria.

10. The apparatus according to claim 8, wherein the request comprises a request for notification about what data analytic service instances are supported at the management data analytics function (32).

11. The apparatus according to claim 8, wherein: the request comprises a request for data analytics; and the apparatus comprises means for receiving a failure message including the information about at least one data analytics service instance provided by the at least one management data analytic function (32).

12. The apparatus according to any of claims 8 to 11, wherein the component implements the management data analytics function (32), or the component implements a centralised repository function storing information about the management data analytics function (32).

13. The apparatus according to any preceding claim, wherein the context options are defined by one or more of the following parameters: type of analytics metric; kind of object for which analysis is performed; geographical location; timing of availability of analytics report; reporting method; and frequency of collecting input data.

14. A method, comprising:
receiving a request (300, 400) from a component implementing a management data analytics consumer function (30) of a communications system;
based on the request, directing (304, 406, 504) to the component implementing the management data analytics consumer function (30) of the communications system information about at least one data analytics service instance provided by at least one management data analytic function (32) of the communications system;
**characterised in that**: the information about at least one data analytics service instance comprises information about context options for the data analytics service instance, wherein the context options indicates configurable parameters and parameter range for which the at least one data analytics service instance can produce analytics, and that the method further comprises receiving a request from the component implementing the management data analytics consumer function (30) for performance of one or more of the at least one data analytics service, wherein the request comprises a set of the context options for said one or more of the at least one data analytics service.

15. A method, comprising:
directing a request (300, 400, 500) to a component implementing a function of a communications system; and
receiving information about at least one data analytics service instance provided by at least one management data analytic function (32) of the communication system;
**characterised in that** the information about the at least one data analytics service instance comprises information about context options for the data analytics service instance, wherein the context options indicates configurable parameters and parameter range for which the data analytics service instance can produce analytics, and that the method further comprises directing, to the at least one management data analytic function (32), a request for performance of one or more of the at least one data analytics service, wherein the request comprises a set of the context options for said one or more of the at least one data analytics service.

## Patentansprüche

1. Einrichtung, die Folgendes umfasst:
Mittel zum Empfangen einer Anforderung (300, 400) von einer Komponente, die eine Verwaltungsdatenanalyseverbraucherfunktion (30) eines Kommunikationssystems implementiert;
Mittel zum Leiten (304, 406, 504) von Informationen über mindestens eine Datenanalysedienstinstanz, die von mindestens einer Verwaltungsdatenanalysefunktion (32) des Kommunikationssystems bereitgestellt wird, auf Basis der Anforderung zur Komponente, die die Verwaltungsdatenanalyseverbraucherfunktion (30) des Kommunikationssystems implementiert;
**dadurch gekennzeichnet, dass**: die Informationen über mindestens eine Datenanalysedienstinstanz Informationen über Kontextoptionen für die Datenanalysedienstinstanz umfassen, wobei die Kontextoptionen auslegbare Parameter und einen Parameterbereich anzeigen, für den die mindestens eine Datenanalysedienstinstanz eine Analyse produzieren kann, und dass die Einrichtung ferner Mittel zum Empfangen einer Anforderung von der Komponente, die die Verwaltungsdatenanalyseverbraucherfunktion (30) implementiert, zur Durchführung von einem oder mehreren des mindestens einen Datenanalysedienstes umfasst, wobei die Anforderung einen Satz der Kontextoptionen für den einen oder die mehreren des mindestens einen Datenanalysedienstes umfasst.

2. Einrichtung nach Anspruch 1, wobei die Anforderung (300) eine oder mehrere Datenanalysedienstinstanzen spezifiziert und die Informationen Informationen über Kontextoptionen für die in der Anforderung spezifizierten Datenanalysedienstinstanzen umfassen.

3. Einrichtung nach Anspruch 1, wobei die Anforderung (400) ein oder mehrere Kriterien spezifiziert; wobei die Einrichtung ferner Mittel zum Identifizieren von einer oder mehreren Datenanalysedienstinstanzen umfasst, die die spezifizierten Kriterien erfüllen; wobei die Informationen Informationen über Kontextoptionen für die eine oder die mehreren identifizierten Datenanalysedienstinstanzen umfassen.

4. Einrichtung nach Anspruch 1, wobei die Anforderung (400) ein oder mehrere Kriterien spezifiziert; und die Einrichtung in Reaktion auf eine Bestimmung, dass die mindestens eine Verwaltungsdatenanalysefunktion (32) eine Datenanalysedienstinstanz, die die Kriterien vollständig erfüllt, nicht unterstützt, Mittel zum Identifizieren von einer oder mehreren Datenanalysedienstinstanz umfasst, die die spezifizierten Kriterien teilweise erfüllen.

5. Einrichtung nach Anspruch 1, wobei die Anforderung eine Anforderung einer Benachrichtigung darüber ist, welche Datenanalysedienstinstanzen an der Verwaltungsdatenanalysefunktion (32) unterstützt werden.

6. Einrichtung nach Anspruch 1, wobei die Anforderung eine Datenanalyseanforderung ist und die Einrichtung Mittel zum Durchführen des Leitens der Informationen in Reaktion auf einen Fehler an der Verwaltungsdatenanalysefunktion (32) umfasst, um die Datenanalyseanforderung zu erfüllen.

7. Einrichtung nach einem der vorhergehenden Ansprüche, wobei die Einrichtung die Verwaltungsdatenanalysefunktion (32) implementiert oder eine zentralisierte Repositoriumsfunktion implementiert, bei der Informationen über die Verwaltungsdatenanalysefunktion (32) gespeichert werden.

8. Einrichtung, die eine Verwaltungsdatenanalyseverbraucherfunktion (30) eines Kommunikationssystems implementiert und Folgendes umfasst:
Mittel zum Leiten einer Anforderung (300, 400, 500) zu einer Komponente, die eine Funktion des Kommunikationssystems implementiert; und
Empfangen von Informationen über mindestens eine Datenanalysedienstinstanz, die von mindestens einer Verwaltungsdatenanalysefunktion (32) bereitgestellt wird;
**dadurch gekennzeichnet, dass**: die Informationen über die mindestens eine Datenanalysedienstinstanz Informationen über Kontextoptionen für die Datenanalysedienstinstanz umfassen, wobei die Kontextoptionen auslegbare Parameter und einen Parameterbereich anzeigen, für den die Datenanalysedienstinstanz eine Analyse produzieren kann, und dass die Einrichtung ferner Mittel zum Leiten einer Anforderung zur Durchführung von einem oder mehreren des mindestens einen Datenanalysedienstes zu der mindestens einen Verwaltungsdatenanalysefunktion (32) umfasst, wobei die Anforderung einen Satz von Kontextoptionen für den einen oder die mehreren des mindestens einen Datenanalysedienstes umfasst.

9. Einrichtung nach Anspruch 8, wobei die Anforderung (300, 500) eine oder mehrere Datenanalysedienstinstanzen spezifiziert und/oder ein oder mehrere Kriterien spezifiziert.

10. Einrichtung nach Anspruch 8, wobei die Anforderung eine Anforderung einer Benachrichtigung darüber umfasst, welche Datenanalysedienstinstanzen an der Verwaltungsdatenanalysefunktion (32) unterstützt werden.

11. Einrichtung nach Anspruch 8, wobei: die Anforderung eine Anforderung einer Datenanalyse umfasst; und die Einrichtung Mittel zum Empfangen einer Fehlernachricht umfasst, die die Informationen über die mindestens eine Datenanalysedienstinstanz beinhaltet, die von der mindestens einen Verwaltungsdatenanalysefunktion (32) bereitgestellt wird.

12. Einrichtung nach einem der Ansprüche 8 bis 11, wobei die Komponente die Verwaltungsdatenanalysefunktion (32) implementiert oder die Komponente eine zentralisierte Repositoriumsfunktion implementiert, bei der Informationen über die Verwaltungsdatenanalysefunktion (32) gespeichert werden.

13. Einrichtung nach einem der vorhergehenden Ansprüche, wobei die Kontextoptionen von einem oder mehreren der folgenden Parameter definiert werden: Typ einer Analysemetrik; Art eines Objekts, für die eine Analyse durchgeführt wird; geografischer Standort; Timing einer Verfügbarkeit eines Analyseberichts; Berichtsverfahren; und Häufigkeit des Sammelns von Eingangsdaten.

14. Verfahren, das Folgendes umfasst:
Empfangen einer Anforderung (300, 400) von einer Komponente, die eine Verwaltungsdatenanalyseverbraucherfunktion (30) eines Kommunikationssystems implementiert;
Leiten (304, 406, 504) von Informationen über mindestens eine Datenanalysedienstinstanz, die von mindestens einer Verwaltungsdatenanalysefunktion (32) des Kommunikationssystems bereitgestellt wird, auf Basis der Anforderung zur Komponente, die die Verwaltungsdatenanalyseverbraucherfunktion (30) des Kommunikationssystems implementiert;
**dadurch gekennzeichnet, dass**: die Informationen über mindestens eine Datenanalysedienstinstanz Informationen über Kontextoptionen für die Datenanalysedienstinstanz umfassen, wobei die Kontextoptionen auslegbare Parameter und einen Parameterbereich anzeigen, für den die mindestens eine Datenanalysedienstinstanz eine Analyse produzieren kann, und dass das Verfahren ferner das Empfangen einer Anforderung von der Komponente, die die Verwaltungsdatenanalyseverbraucherfunktion (30) implementiert, zur Durchführung von einem oder mehreren des mindestens einen Datenanalysedienstes umfasst, wobei die Anforderung einen Satz der Kontextoptionen für den einen oder die mehreren des mindestens einen Datenanalysedienstes umfasst.

15. Verfahren, das Folgendes umfasst:
Leiten einer Anforderung (300, 400, 500) zu einer Komponente, die eine Funktion eines Kommunikationssystems implementiert; und
Empfangen von Informationen über mindestens eine Datenanalysedienstinstanz, die von mindestens einer Verwaltungsdatenanalysefunktion (32) des Kommunikationssystems bereitgestellt wird;
**dadurch gekennzeichnet, dass**: die Informationen über die mindestens eine Datenanalysedienstinstanz Informationen über Kontextoptionen für die Datenanalysedienstinstanz umfassen, wobei die Kontextoptionen auslegbare Parameter und einen Parameterbereich anzeigen, für den die Datenanalysedienstinstanz eine Analyse produzieren kann, und dass das Verfahren ferner das Leiten einer Anforderung zur Durchführung von einem oder mehreren des mindestens einen Datenanalysedienstes zu der mindestens einen Verwaltungsdatenanalysefunktion (32) umfasst, wobei die Anforderung einen Satz von Kontextoptionen für den einen oder die mehreren des mindestens einen Datenanalysedienstes umfasst.

## Revendications

1. Appareil, comprenant :
des moyens pour recevoir une demande (300, 400) en provenance d'un composant mettant en œuvre une fonction de consommateur d'analyse de données de gestion (30) d'un système de communication ;
des moyens pour, sur la base de la demande, diriger (304, 406, 504) vers le composant mettant en œuvre la fonction de consommateur d'analyse de données de gestion (30) du système de communication des informations sur au moins une instance de service d'analyse de données fournie par au moins une fonction d'analyse de données de gestion (32) du système de communication ;
**caractérisé en ce que** : les informations sur au moins une instance de service d'analyse de données comprennent des informations sur des options de contexte pour l'instance de service d'analyse de données, les options de contexte indiquant des paramètres configurables et une plage de paramètres pour lesquels l'au moins une instance de service d'analyse de données peut produire des analyses, et **en ce que** l'appareil comprend en outre des moyens pour recevoir une demande en provenance du composant mettant en œuvre la fonction de consommateur d'analyse de données de gestion (30) pour réaliser un ou plusieurs du ou des services d'analyse de données, la demande comprenant un ensemble des options de contexte pour lesdits un ou plusieurs du ou des services d'analyse de données.

2. Appareil selon la revendication 1, dans lequel la demande (300) spécifie une ou plusieurs instances de service d'analyse de données, et les informations comprennent des informations sur des options de contexte pour les instances de service d'analyse de données spécifiées dans la demande.

3. Appareil selon la revendication 1, dans lequel la demande (400) spécifie un ou plusieurs critères ; dans lequel l'appareil comprend en outre des moyens pour identifier une ou plusieurs instances de service d'analyse de données satisfaisant aux critères spécifiés ; dans lequel les informations comprennent des informations sur des options de contexte pour les une ou plusieurs instances de service d'analyse de données identifiées.

4. Appareil selon la revendication 1, dans lequel la demande (400) spécifie un ou plusieurs critères ; et l'appareil comprend des moyens pour, en réponse à une détermination selon laquelle l'au moins une fonction d'analyse de données de gestion (32) ne prend pas en charge une instance de service d'analyse de données satisfaisant pleinement aux critères, identifier une ou plusieurs instances de service d'analyse de données qui satisfont partiellement aux critères spécifiés.

5. Appareil selon la revendication 1, dans lequel la demande est une demande d'une notification précisant quelles instances de service d'analyse de données sont prises en charge au niveau de la fonction d'analyse de données de gestion (32).

6. Appareil selon la revendication 1, dans lequel la demande est une demande d'analyse de données, et l'appareil comprend des moyens pour diriger les informations en réponse à un échec au niveau de la fonction d'analyse de données de gestion (32) à satisfaire à la demande d'analyse de données.

7. Appareil selon l'une des revendications précédentes, dans lequel l'appareil met en œuvre la fonction d'analyse de données de gestion (32), ou met en œuvre une fonction de référentiel centralisée stockant des informations sur la fonction d'analyse de données de gestion (32).

8. Appareil mettant en œuvre une fonction de consommateur d'analyse de données de gestion (30) d'un système de communication, comprenant :
des moyens pour diriger une demande (300, 400, 500) vers un composant mettant en œuvre une fonction du système de communication ; et
recevoir des informations sur au moins une instance de service d'analyse de données fournie par au moins une fonction d'analyse de données de gestion (32) ;
**caractérisé en ce que** les informations sur l'au moins une instance de service d'analyse de données comprennent des informations sur des options de contexte pour l'instance de service d'analyse de données, les options de contexte indiquant des paramètres configurables et une plage de paramètres pour lesquels l'instance de service d'analyse de données peut produire des analyses, et **en ce que** l'appareil comprend en outre des moyens pour diriger vers l'au moins une fonction d'analyse de données de gestion (32) une demande pour réaliser un ou plusieurs du ou des services d'analyse de données, la demande comprenant un ensemble des options de contexte pour lesdits un ou plusieurs du ou des services d'analyse de données.

9. Appareil selon la revendication 8, dans lequel la demande (300, 500) spécifie une ou plusieurs instances de service d'analyse de données et/ou spécifie un ou plusieurs critères.

10. Appareil selon la revendication 8, dans lequel la demande comprend une demande de notification précisant quelles instances de service d'analyse de données sont prises en charge au niveau de la fonction d'analyse de données de gestion (32).

11. Appareil selon la revendication 8, dans lequel : la demande comprend une demande d'analyse de données ; et l'appareil comprend des moyens pour recevoir un message d'échec comportant les informations sur au moins une instance de service d'analyse de données fournie par l'au moins une fonction d'analyse de données de gestion (32).

12. Appareil selon l'une des revendications 8 à 11, dans lequel le composant met en œuvre la fonction d'analyse de données de gestion (32), ou le composant met en œuvre une fonction de référentiel centralisée stockant des informations sur la fonction d'analyse de données de gestion (32).

13. Appareil selon l'une des revendications précédentes, dans lequel les options de contexte sont définies par un ou plusieurs des paramètres suivants : un type de métrique d'analyse ; un genre d'objet pour lequel l'analyse est réalisée ; un emplacement géographique ; un moment de disponibilité de rapport d'analyse ; un procédé de rapport ; et une fréquence de collecte de données d'entrée.

14. Procédé, comprenant les étapes suivantes :
recevoir une demande (300, 400) en provenance d'un composant mettant en œuvre une fonction de consommateur d'analyse de données de gestion (30) d'un système de communication ;
sur la base de la demande, diriger (304, 406, 504) vers le composant mettant en œuvre la fonction de consommateur d'analyse de données de gestion (30) du système de communication des informations sur au moins une instance de service d'analyse de données fournie par au moins une fonction d'analyse de données de gestion (32) du système de communication ;
**caractérisé en ce que** : les informations sur au moins une instance de service d'analyse de données comprennent des informations sur des options de contexte pour l'instance de service d'analyse de données, les options de contexte indiquant des paramètres configurables et une plage de paramètres pour lesquels l'au moins une instance de service d'analyse de données peut produire des analyses, et **en ce que** le procédé comprend en outre la réception d'une demande en provenance du composant mettant en œuvre la fonction de consommateur d'analyse de données de gestion (30) pour réaliser un ou plusieurs du ou des services d'analyse de données, la demande comprenant un ensemble des options de contexte pour lesdits un ou plusieurs du ou des services d'analyse de données.

15. Procédé, comprenant les étapes suivantes :
diriger une demande (300, 400, 500) vers un composant mettant en œuvre une fonction d'un système de communication ; et
recevoir des informations sur au moins une instance de service d'analyse de données fournie par au moins une fonction d'analyse de données de gestion (32) du système de communication ;
**caractérisé en ce que** les informations sur l'au moins une instance de service d'analyse de données comprennent des informations sur des options de contexte pour l'instance de service d'analyse de données, les options de contexte indiquant des paramètres configurables et une plage de paramètres pour lesquels l'instance de service d'analyse de données peut produire des analyses, et **en ce que** le procédé comprend en outre le fait de diriger vers l'au moins une fonction d'analyse de données de gestion (32) une demande pour réaliser un ou plusieurs du ou des services d'analyse de données, la demande comprenant un ensemble des options de contexte pour lesdits un ou plusieurs du ou des services d'analyse de données.
